# EUROPEAN PATENT APPLICATION

(11) **EP 4 325 262 A1**
(43) Date of publication of application: **21.02.2024**
(21) Application number: 22190829.6
(22) Date of filing: 17.08.2022
(51) Int. Cl.: G02B 6/42, G02B 6/136

(54) **IMPROVED LIGHT SOURCE INTEGRATION**

(71) Applicant: Sentea, 9052 Gent (BE)
(72) Inventor: SPUESENS, Thijs, Gent (BE); BOCKSTAELE, Ronny, Gent (BE); VERHAEGEN, Karsten, Gent (BE)
(74) Representative: Rogiest, Wouter

(57) **Abstract**

The invention provides, amongst other aspects, a silicon on insulator, SOI, device (10) for receiving a light source device (20) in a flip-chip arrangement, the device (10) comprising, from bottom to top: a support layer (1); a BOX, buried oxide, layer (2) comprising BOX material; a BOX-covering layer (2), comprising a selective etch stop material; a cladding oxide layer (4, 4c), comprising a light interface (5); wherein the device comprises a plurality of recesses extending between the support layer (1) and the BOX-covering layer (3), said recesses defining a pocket (40) for said receiving of the light source device (20) and a plurality of pedestals (8); wherein at least one of the pedestals (8) is provided at a side of the pocket (40) that is opposite with respect to another one of the pedestals (8); wherein the pedestals (8) each extend between the support layer (1) and the BOX-covering layer (3), thereby comprising a top portion (3a) comprising, preferably consisting of, said selective etch stop layer material.

## Description

### Field of the invention

The present invention relates to improved light source integration. Particularly, the invention relates to the vertical alignment involved in integrating an alignment-requiring device, e.g., a light source, with a SOI device, i.e., a device based on silicon on insulator technology.

### Background art

Integrating a light source on silicon has been a very popular research topic over the last years. This goes from very fundamental work where it is attempted to epitaxially grow III-V on silicon, to heterogeneous integration where the III-V material is bonded on the silicon, to flip-chip and transfer printing methods where fully or partially processed III-V sources are transferred to the silicon and fixed through soldering or bonding.

In the integration of a light source device in a silicon device, a significant challenge is the edge coupling between the light source, e.g., a III-V device, on the one hand, and the light interface, e.g., the silicon waveguide, on the other hand.

Related devices and methods are disclosed in US20200284978A1, US10677986B1 and US20180180826A1. However, these are overly complex and/or lack accuracy and/or are not well adapted to the requirements of integrating a light source on a photonic chip.

The present invention aims at addressing issues inherent to light source integration, such as the issues mentioned above.

### Summary of the invention

According to a first aspect, the present invention provides a silicon on insulator, SOI, device for receiving a light source device in a flip-chip arrangement, the device comprising, from bottom to top:
- a support layer;
- a BOX, buried oxide, layer comprising BOX material;
- a BOX-covering layer, preferably a silicon layer, comprising selective etch stop material, preferably comprising silicon layer material;
- a cladding oxide layer, comprising a light interface;
wherein the device comprises a plurality of recesses extending between the support layer and the BOX-covering layer, said recesses defining a pocket for said receiving of the light source device and a plurality of pedestals; wherein at least one of the pedestals is provided at a side of the pocket that is opposite with respect to another one of the pedestals; wherein the pedestals each extend between the support layer and the BOX-covering layer, thereby comprising a top portion comprising, preferably consisting of, said selective etch stop material, said selective etch stop material preferably being silicon layer material.

Herein, the light source device may comprise, e.g., a light source. However, the alignment-requiring device may be any other device to be integrated on an SOI wafer, and the term "light source device" should not be construed as limiting. The term "selective etch stop material" refers to any material that allows an etch stop that is selective, preferably is selective with respect to oxide. In embodiments, the BOX-covering layer consists of the selective etch stop material, e.g., the BOX-covering layer is a silicon layer consisting of silicon as etch stop material. In embodiments, the BOX-covering layer comprises further material apart from the selective etch stop material. For instance, the selective etch stop material may be provided as a sublayer, with one or more sublayers provided on and/or below the etch stop sublayer. In example embodiments, the BOX-covering layer is a silicon layer comprising a silicon sublayer comprising or consisting of selective etch stop material.

A main advantage of the device may be that it allows for accurate vertical alignment when receiving, within the pocket, a light source device. Thereby, the pedestals may act as mechanical stoppers, whereof the dimensions, and particularly the height, may be the crucial parameter for vertical alignment. The required accuracy may be advantageously provided by "reusing" of the structure of common commercially available SOI wafers. Such "common" SOI wafers are commonly known to comprise, from bottom to top:
(i) a very thick silicon support layer; this part makes up almost the entire wafer;
(ii) a thin middle layer of the insulating silicon dioxide, the buried oxide (BOX) layer; and
(iii) a BOX-covering layer being a silicon, topmost layer, particularly a thin top layer of monocrystalline silicon, wherein the circuits are created.
Such SOI wafers or SOI substrates are commonly manufactured by highly specialized companies, in the form of ultra-thin disks of 200 to 300 mm diameter and thickness less than 1 mm, subject to very stringent specifications. For instance, the thickness of the topmost layer and the BOX layer may be required to have less than 2% thickness non-uniformity across a 200 mm wafer, or even less than 1%. This very high uniformity may be put to good use with a device and method according to the invention. By relying on the original dimensions of the SOI wafer, the dimensions of the device, including the pedestals, may be accurately tuned regardless of the etch type combination, attaining precise alignment. Related, the invention may reuse any commercially available SOI wafer, including those with a topmost layer that is not provided as consisting of silicon, but may comprise any selective etch stop material, preferably in the form of a selective etch stop layer or sublayer.

Related, the invention may enjoy high structural and mechanical integrity. The SOI wafer layer structure being manufactured according to stringent specifications, good structural adhesion between the layers is ensured. This may be advantageous for the structural integrity of the pedestals, particularly in embodiments wherein the pedestals consist of only layers already being present in the original SOI wafer.

Related, the invention may advantageously "reuse" a selective etch step directed at the BOX-covering layer, e.g., a selective etch step that was already present in the manufacturing process because of a further device, such as a modulator or a photodiode, manufactured on the same SOI wafer concurrently with the device of the invention, wherein the BOX-covering layer may be, e.g., a silicon layer comprising silicon layer material. In this regard, rather than requiring introducing a new manufacturing step, the invention may allow to reuse an existing manufacturing step for the defining of the pedestals, thereby solving the problem of vertical alignment more efficiently than was possible with state-of-the-art devices and methods.

According to a second aspect, the invention provides an apparatus comprising the device of the invention comprising a light interface and a light source device comprising a light source; wherein the device and the light source device are in a flip-chip arrangement with alignment of said light interface and said light source; and wherein the light source device is attached to the device via an attachment between an attachment-related portion of the light source device and the top portions of the pedestals of the device.

According to a further aspect, the invention provides a method of manufacturing a SOI device suitable for receiving a light source device in a flip-chip arrangement, comprising the steps of:
- providing a SOI wafer portion comprising, from bottom to top:
   - a support layer;
   - a BOX, buried oxide, layer comprising BOX material;
   - a BOX-covering layer, preferably a silicon layer, comprising a selective etch stop material, preferably silicon layer material;
- forming one or more structures in said BOX-covering layer, said structures relating to silicon structures and/or silicon nitride structures, said forming comprising each of: selectively etching said BOX-covering layer, providing a cladding oxide layer over said BOX-covering layer, and providing a light interface within said cladding oxide layer;
- forming a plurality of recesses extending between the support layer and the BOX-covering layer, said recesses defining a pocket for said receiving of the light source device and a plurality of pedestals;
wherein at least one of the pedestals is provided at a side of the pocket that is opposite with respect to another one of the pedestals; wherein a height of the pedestals is defined by a selective etch, whereby said selective etch stop material of the BOX-covering layer, preferably said silicon layer material of the silicon layer, is comprised in a top portion of each pedestal and acts as etch stop.

Such a method may have similar advantages as the device according to the invention, with better height definition and/or structural integrity of the pedestals, which may lead to improved vertical alignment accuracy.

Preferred embodiments and their advantages are provided in the description and the dependent claims.

### Brief description of the drawings

The present invention will be discussed in more detail below, with reference to the attached drawings.
Fig. 1 shows a plurality of example devices in production relating to the invention.
Fig. 2 shows a plurality of example devices relating to the invention.
Fig. 3 shows an example apparatus according to the invention. Thereby, Fig. 3A shows a cross-section view, and Fig. 3B shows a top view.
Fig. 4 shows an example method of manufacturing according to the invention.

### Description of embodiments

The following descriptions depict only example embodiments and are not considered limiting in scope. Any reference herein to the disclosure is not intended to restrict or limit the disclosure to exact features of any one or more of the exemplary embodiments disclosed in the present specification.

Furthermore, the terms first, second, third and the like in the description and in the claims are used for distinguishing between similar elements and not necessarily for describing a sequential or chronological order. The terms are interchangeable under appropriate circumstances and the embodiments of the invention can operate in other sequences than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

In this document, the term "light interface" may refer to any form of edge coupling, including waveguides for edge coupling, and may relate to a variety of geometries and materials. In embodiments, the light interface relates to a trident structure or an inverted taper structure. In embodiments, the light interface relates to a structure in the nitride layer, preferably an inverted taper structure. In embodiments, the light interface relates to a structure using both a nitride layer and a silicon layer underneath, preferably an inverted taper structure.

In this document, a "light source" may be any source of visible or invisible light. In embodiments, the light source may relate to any of laser, LED, SLED, SOAs, RSOAs.

In this document, the term "SOI device" may refer to any silicon device or related device, preferably a silicon photonics chip, without being limited to silicon in terms of material, number of materials, or technologies used. Likewise, the term "light source device" may refer to any device comprising a light source, preferably a III-V device, without being limited to III-V in terms of material, number of materials, or technologies used.

In the integration of a light source device in a silicon device, a significant challenge is the edge coupling between the light source and the light interface, e.g., the silicon waveguide. This may relate to, e.g., flip-chip integration of III-V light sources in a cavity (or pocket) on a silicon photonics chip. Thereby, vertical alignment is a key challenge. One approach is to integrate the light source on a submount and actively align this submount to the silicon chip. This, however, is complex, as it requires providing a submount.

Vertical alignment is an integral part of the challenge of edge coupling. Thereby, vertical alignment depends not only on the accuracy of the attachment process, but also on the process control of the wafers for the device and the light source device. Currently available commercial flip-chip bonding machines may offer very high placement accuracy on the in-plane axes down to 500 nm. The post-bond accuracy is however typically less, with, e.g., tolerances of 1000 nm. This should be contrasted with the stringent requirements applying to the wafer production, which may provide higher accuracies, which may be advantageous for the vertical alignment according to the invention.

The use of pedestals or pillars inside the pocket (or recess) critically depends on a good definition of the pedestal height. Thereby, not only the absolute dimensions but also the uniformity over different pedestals is important. Prior art devices and methods may define the pedestal height relying mostly or entirely on a timed etch making it prone to process variations. Even if accuracy is high locally (for a given pedestal), it is not guaranteed that this accuracy can be met uniformly (for all pedestals). This may be addressed with the invention, providing at least one process step with a selective etch, rather than a timed etch.

In embodiments, each pedestal further comprises a medial portion comprising, preferably consisting of, said BOX material; wherein a thickness of the medial portion is identical to a thickness of the BOX layer of the SOI wafer from which the device is produced. This may advantageously yield improved alignment accuracy and/or improved homogeneity of height across pedestals and/or improved structural integrity for the pedestals.

In embodiments, a thickness of the top portion is at least 10%, preferably at least 50%, more preferably at least 80%, of a thickness of the topmost layer of the SOI wafer from which the device is produced, preferably of the thickness of the BOX-covering layer of the SOI wafer from which the device is produced.

In embodiments, the number of pedestals is at least four, wherein the plurality of pedestals is provided grouped at two opposite sides of the pocket. In related embodiments, said being grouped relates to two rows of at least three pedestals provided grouped at two opposite sides of the pocket, e.g., two rows of two, more than two, three, more than three, four, more than four, or five pedestals. This being provided in rows may have, among other advantages, the advantage of improved attachment between the device and the light source device, by allowing space for flowing of solder and/or allowing any adhesive or solder between the individual pedestals. This may, e.g., relate to embodiments wherein solder is provided between the heat-conducting elements. In alternative embodiments, In embodiments, the number of pedestals is at least two, wherein the plurality of pedestals is provided grouped at two opposite sides of the pocket, yet wherein the number of pedestals of one or both groups is one per group. In such embodiments, at least at one side, or at both sides, a single respective pedestal is provided. This may, e.g., relate to a pedestal or two pedestals with cuboid shape, i.e., a beam-shaped pedestal or two beam-shaped pedestals.

In embodiments, a bottom surface of said pocket extends within said support layer, wherein a depth H1 of said pocket with respect to the BOX layer is at least 50 nm, preferably at least 100 nm. In alternative embodiments, the depth H1 is 0. In such embodiments, the bottom surface of the pocket extends over the top surface of the support layer.

In embodiments, the attachment-related portion of the light source device is provided with a passivation layer with a thickness H2 chosen based on a height of the pedestals for ensuring vertical alignment of the light source and the light interface. The passivation layer is preferably made of a dielectric, more preferably of an oxide or a nitride. In related embodiments, the thickness H2 of the passivation layer is between 50 and 500 nm, preferably is between 100 nm and 400 nm.

In embodiments, the apparatus comprises one or more further respective devices, preferably a modulator and/or a photodiode, that comprise respective further portions of said support layer, said BOX layer and said BOX-covering layer, preferably said silicon layer, wherein the respective further BOX-covering layer portions are selectively etched in the same etch step as the top portions of the pedestals.

In embodiments, the method comprises the further step of:
- providing, over a bottom surface of said pocket, a heat-conducting metallic layer, preferably a Ti/Au-alloy-based layer, preferably by means of under bump metallization, UBM;
- providing, over said heat-conducting metallic layer, a solder layer, preferably a Au/Sn-alloy-based layer.

This may relate to providing a good attachment between the device and the light source device. Thereby, the materials may be advantageous in that they provide high conductivity for both heat and electricity, the latter preferably relating at least to the powering of the light source device, e.g., the pumping of the light source comprised in the light source device. Moreover, the heat-conducting metallic layer comprising Au, such as a Ti/Au-alloy-based layer, may be advantageously combined with the Au/Sn-alloy-based solder layer to provide advantageous soldering properties. Particularly, the melting point of such a solder may be low while applying the solder, for instance may be lower than 300 °C or 290 °C or about 280 °C, yet may rise after application of the solder, through diffusion of the Au present in the heat-conducting metallic layer into the solder material. This may provide the advantage of relatively low temperature soldering, which may ensure minimal thermal impact on the device and the light source device, combined with good heat resistance for the obtained apparatus, as the melting temperature of the solder may have risen well above the melting temperature upon application of the solder, e.g., may have risen by 5 °C or 10 °C or more than 10 °C.

In embodiments, the method comprises the further step of:
- attaching, according to a flip-chip arrangement, a light source device to the device, said attaching relating to an attachment between an attachment-related portion of the light source device and the top portions of the pedestals of the device.

In embodiments, the attaching comprises bonding, through soldering, of a bonding-related portion of said light source device and a bonding-related portion of said device through a solder. In preferred embodiments, the solder is an Au/Sn-alloy-based solder.

In embodiments, said bonding-related portion of said device relates to a heat-conducting metallic layer, preferably a TI/Au-alloy-based layer, provided over a bottom surface of said pocket.

In embodiments, the bonding-related portion of said light source device relates to a heat-conducting metallic layer, preferably a Ti/Pt/Au-alloy-based layer, provided over a surface of said light source device in proximity of a light source comprised in said light source device.

In embodiments, the method further comprises the step, prior to said attaching, of:
- providing, over an attachment-related portion of the light source device, a passivation layer; wherein a thickness H2 of said passivation layer is chosen based on a height of the pedestals for ensuring vertical alignment of a light source comprised in said light source device and said light interface.

In embodiments, the light source relates to an InP waveguide, and/or the light interface relates to a SiN waveguide. Thereby, preferably, the BOX-covering layer is a silicon layer comprising silicon layer material as selective etch stop material.

In embodiments, the method steps are carried out collectively for respective SOI wafer portions belonging to the same wafer, wherein the method comprises the further step of dicing the wafer for obtaining respective devices.

In embodiments, the light interface is angled according to an angle of between 2 and 45 degrees, preferably between 5 and 20 degrees. This may advantageously prevent back reflection.

The BOX-covering layer and the selective etch stop material may be any material and material combination suitable for enabling a selective etch stop by means of the etch stop material, preferably for enabling a selective etch stop with respect to oxide by means of the etch stop material. In embodiments, the BOX-covering layer is a silicon layer comprising silicon layer material as selective etch stop material. In embodiments, the BOX-covering layer is a silicon layer consisting of silicon layer material as selective etch stop material. In embodiments, the BOX-covering layer comprises a silicon nitride or lithium niobate as selective etch stop material, wherein the selective etch stop material is preferably provided throughout the entire BOX-covering layer, or within the confines of a sublayer of the BOX-covering layer. In embodiments, the BOX-covering layer comprises germanium as selective etch stop material, preferably comprises a germanium layer or sublayer. In embodiments, the BOX-covering layer comprises two or more sublayers, whereof at least one or two or three relate to sublayers comprising a material that is suitable as selective etch stop material, with, e.g., two sublayers of different material of silicon nitride, lithium niobate and germanium. This may advantageously allow the BOX-covering layer to be used as selective etch stop in different etching steps, wherein different pedestal heights may be obtained depending on the type of etch used.

In the below, example embodiments of the invention will be described that illustrate the invention, without limiting the scope of the invention.

### Example 1: example device and apparatus according to the invention

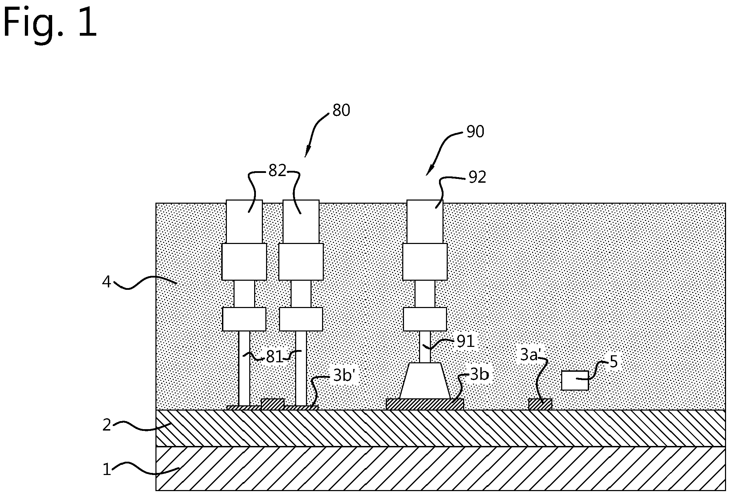

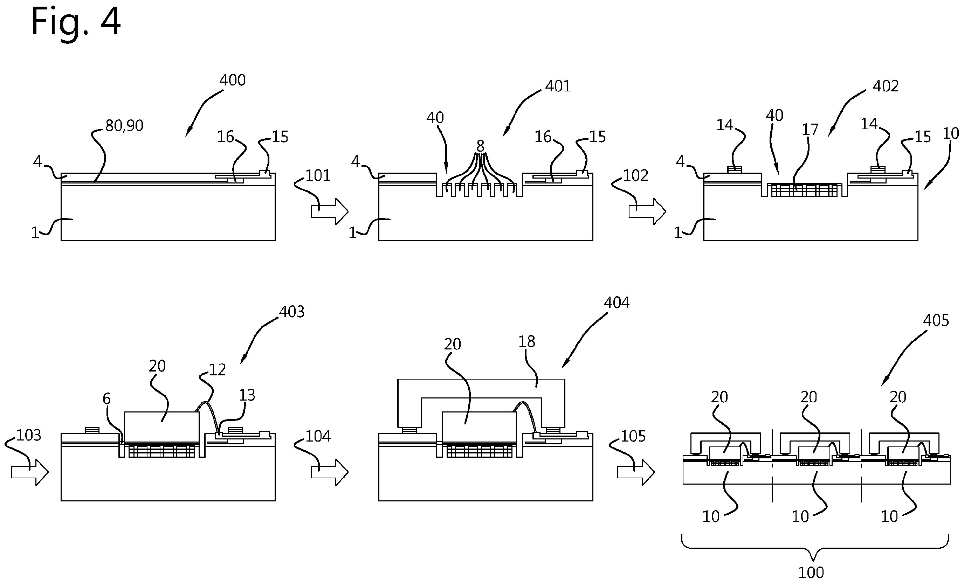

In this example, an example device and associated apparatus are considered. It will be appreciated that, in certain variants of this example, the device and apparatus of this example may be manufactured with the example manufacturing method of Example 2. In view thereof, some reference numerals present on Fig. 4 yet not on any of Fig. 1, 2 or 3 are nevertheless indicated.

Fig. 1 shows a plurality of example devices in production relating to the invention. This may relate to a phase of the manufacturing, such as the one of display 400 of Example 2. This relates to an example of the SOI device 10 of the invention, on the one hand, but also to further example devices 80, 90, particularly a modulator 80 and a photodiode 90, all formed concurrently and within the same SOI wafer portion, that comprises, from bottom to top: a support layer 1; a BOX layer 2 comprising BOX material; and a BOX-covering layer 3 comprising a selective etch stop material. In this example, the BOX-covering layer is a thin silicon layer 3 comprising silicon layer material as selective etch stop material. The various devices 10, 80, 90 have been formed up to a certain degree, whereby parts of the silicon layer 3 have been removed through etching, e.g., with selective etch, or a combination of selective etch and timed etch. The remain portions of the silicon layer 3 relate to a modulator-relating portion 3b' with non-uniform thickness, a photodiode-relating portion 3b, and a device-relating portion 3a', from which the eventual top portions 3a of the pedestals 8 may be obtained. These portions 3b', 3b and 3a' may each act as waveguide layers for the involved devices 10, 80, 90, or, as in the case of device 10, as etch stop. The forming of the devices further involves depositing cladding oxide, in several steps, resulting in cladding oxide layer 4.

The modulator 80 and 90 further comprise vertical bond pad interconnections 82 and 92 extending within the cladding oxide layer 4, with the actual bond pads at their top surface. Thereby, the bond pad interconnections have a cross section that varies over the length; this may relate to portions being metal, for larger cross-sections, and vias, for smaller cross-sections. The modulator 80 further comprises two respective contacts extending between respective bond pad interconnections and connection portions of the modulator-relating portion 3b'. The photodiode 90 further comprises a contact extending between the bond pad interconnection 92 and a Germanium section, which in its turn connects to the photodiode-relating portion 3b.

As for the device 10, the light interface 5, being a SiN waveguide, is already present within the cladding oxide layer. It is provided at appropriate height to allow optimal vertical alignment with a light source device 20 yet to be provided in a pocket 40 yet to be formed.

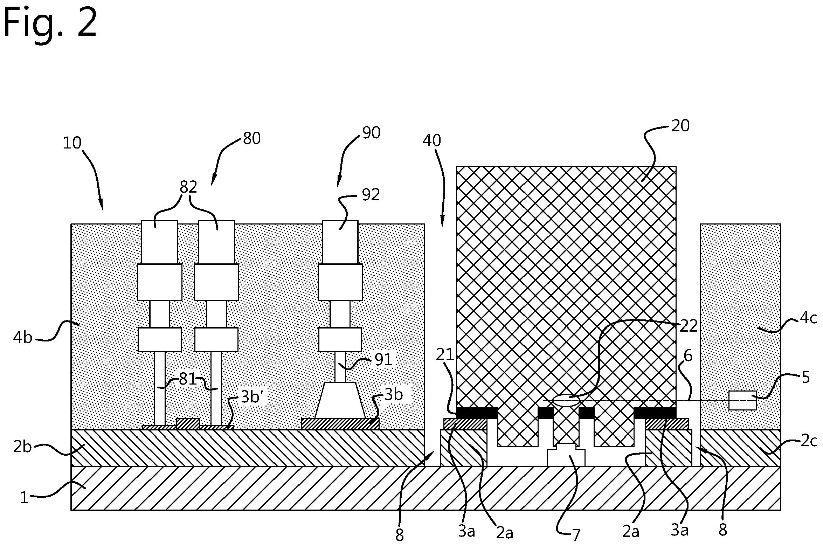

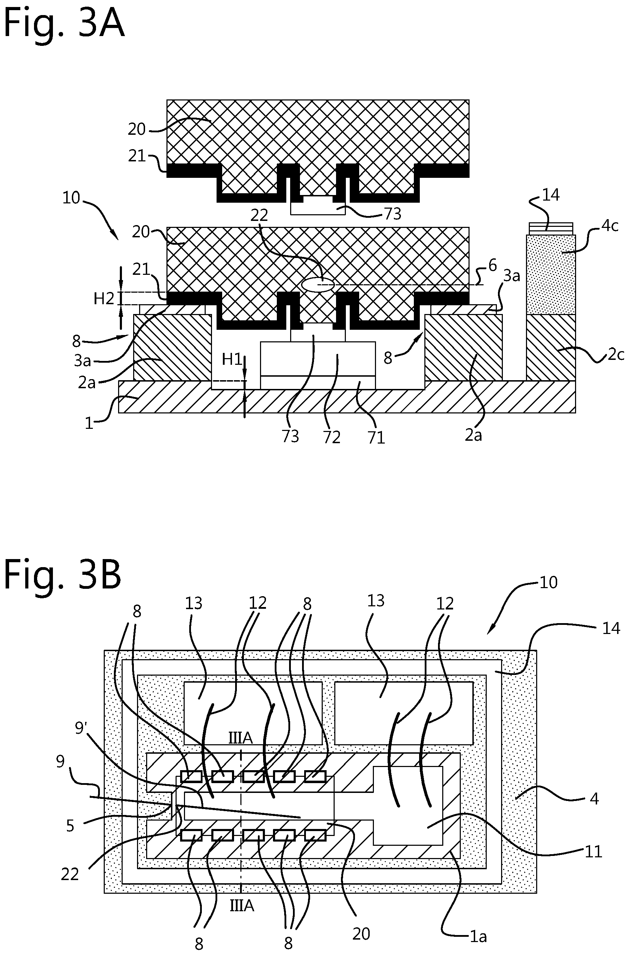

Fig. 2 shows a plurality of example devices relating to the invention. This shows the device 10 of the invention, along with devices 80, 90, as well as an example light source device 20 of the invention. Thereby, the device 10 and light source device 20 together provide an example apparatus according to the invention, which is furthermore displayed on Fig. 3A, in cross-section view, and Fig. 3B, according to a top view.

Turning from Fig. 1 to the apparatus of Fig. 2, 3A and 3B, a plurality of recesses has been provided. The recesses extend between the support layer 1 and the silicon layer 3. They define a pocket 40 for the receiving of the light source device 20, and a plurality of pedestals 8. The pedestals are provided along opposite sides of the pocket 40. Particularly, the pedestals are grouped in two rows of five pedestals 8 provided grouped at opposite sides of the pocket 40.

During the forming of the pocket 40, the top portions 3a of the pedestals 8 have acted as etch stop. This allows a more accurate etch than would be possible by forming the pocket and pedestals 8 with a timed etch. The thickness of the top portion 3a is at least 10% of the thickness of the topmost layer of the SOI wafer from which the device 10 is produced. This may relate to further etching that has been performed on the top portions, prior to obtaining the pedestals 8 in their final form. This does not jeopardize accuracy of alignment, since any kind of etch, including a timed etch, can be performed accurately in view of the limited depth of the device-relating portion 3a' from which the top portions 3a are obtained. In contrast, having to form pedestals by using a timed etch over larger depths, e.g., the whole stack and/or over the whole depth of the pocket 40, would lead to less accurate height for the pedestals 8, and hence, to less accurate vertical alignment.

The pedestals 8 further comprise a medial portion 2a consisting of the BOX material. Thereby, a thickness of the medial portion 2a is identical to a thickness of the BOX layer of the SOI wafer from which the device 10 is produced. This enables accurate vertical alignment.

The recesses furthermore define a light-interface-relating portion 4c of the cladding oxide layer 4, comprising the light interface 5, and a further portion 4b of the cladding oxide layer, relating to the further devices 80, 90.

The bottom surface of the pocket 40 extends within said support layer 1, wherein a depth H1 of the pocket 40 with respect to the BOX layer is at least 50 nm, preferably at least 100 nm. In alternative examples (not shown), H1 is 0.

The device and the light source device 20 together form the apparatus. The device 10 and the light source device 20 are in a flip chip arrangement. Thereby, alignment is realized according to alignment axis 6, allowing transmitting light from the light source 22 of the light source device 20 to the light interface 5 of the device 10 with minimized loss. Thereby, the light source 22 is an InP waveguide, and the light interface is a SiN waveguide.

The light source device 20 is attached to the device 10 via an attachment between an attachment-related portion of the light source device 20 and the top portions 3a of the pedestals 8 of the device 10.

The attachment-related portion of the light source device 20 is provided with a passivation layer 21 made of a dielectric being an oxide or a nitride, with a thickness H2 chosen based on a height of the pedestals 8 for ensuring vertical alignment of the light source 22 and the light interface 5. As shown on Fig. 3A (top - i.e., light source device with initial passivation layer 21'), the thickness of the initial passivation layer 21', i.e., the passivation layer just after depositing, can initially be larger than needed. It may subsequently be reduced, to realize the desired passivation layer thickness. This ensures interoperability since it allows various light source devices of various sources to be useable with the device of the invention.

The thickness H2 of the passivation layer 21 is between 50 and 500 nm.

The device 10 and light source device 20 are bonded through bonding means 7. The bonding means 7 comprises heat-conducting layers 71, 73 and solder 72. The bonding is realized through soldering of the heat-conducting layers 71, 73 of the device 10 and the light source device 20, by means of the solder 72. The bonding ensures attachment and allows to dissipate heat originating from the light source device to further portions of the device 10, such as the support layer 1. The solder 72 is an Au/Sn-alloy-based solder. The heat-conducting metallic layer 71, also referred to as bonding-related portion of the device 10, is a TI/Au-alloy-based layer, provided over a bottom surface of said pocket. On the other hand, the heat-conducting layer 73 of the light source device 10, also referred to as bonding-related portion of the light source device 20, is a Ti/Pt/Au-alloy-based layer. As can be seen on Fig. 2 and 3A, this heat-conducting layer 73 is provided over a surface of said light source device in proximity of the light source 22, enabling good heat dissipation from the light source toward the heat-conducting layer.

Referring to Fig. 3B, a metal seal ring 14 is deposited around the apparatus. Within the seal ring 14, respective bond pads 13 are present for connection with the pocket portion of the device 10, on the one hand, and the light source device 20, on the other hand. This involves a contact 11 provided over the bottom of the pocket 40 of the device, and a pair of wire bonds 12. One pair of wire bonds 12 runs between the contact 11 and the bond pad 13 associated with portions of the device 10 situated in the pocket 40. Another pair of wire bonds 12 runs between the light source device 20 and the bond pad 13 associated with the light source device 20.

As shown on Fig. 3B, the waveguide 9 enters the apparatus underneath the seal ring and approaches the light source device 20 along a non-orthogonal direction. Thereby, an angle of between 5 and 20 degrees is provided, leading to an angled light interface 5. This may be advantageous to prevent back-reflection. Particularly, the angled edge may prevent reflection from being coupled back into the waveguide core from which it was emitted, i.e., the light source. This may be especially advantageous with a light source being a laser or a semiconductor optical amplifier, both of which may be very sensitive to back-reflections.

On the top view provided by Fig. 3B, the example light source device 20 is situated above portions of the device, thereby hiding part of the pedestals 8 and of the support layer top surface 1a extending around the base of the pedestals 8. Thereby, the light source device 20 is depicted as transparent merely for illustrative purposes, and in fact is opaque (not shown).

### Example 2: example manufacturing method according to the invention

Fig. 4 shows an example method of manufacturing according to the invention, illustrating process steps 101-105. The process may thereby advantageously provide more accurate vertical alignment than a method relying on a timed etching. It will be appreciated that, in certain variants of this example, the device and apparatus manufactured may be the example device and apparatus of Example 1. In view thereof, some reference numerals present on Fig. 1, 2 or 3 yet not on Fig. 4 are nevertheless indicated.

The method starts with the manufacturing of a SOI device 10 suitable for receiving a light source device 20 in a flip-chip arrangement, with part of the manufacturing of the device 10 illustrated with method step 101 and 102.

First, the method comprises the step of providing a SOI wafer portion comprising, from bottom to top: a support layer 1; a BOX layer 2 comprising BOX material and a BOX-covering layer 3 comprising a selective etch stop material. In this example, the BOX-covering layer is a thin silicon layer 3 comprising silicon layer material as selective etch stop material. Subsequently (not shown), several structures 80, 90 are formed in the silicon layer 3. This involves selectively etching the silicon layer 3, and providing a cladding oxide layer 4, 4c over the silicon layer 3. The structures may relate to silicon as well as silicon nitride structures. For example, this may relate to the modulator 80 and/or the photodiode of Example 1. Also, as shown in display 400 of Fig. 4, this relates to forming an integrated detector 16 in the cladding oxide layer 4, along with bond pads 15 connected thereto. Furthermore, this comprises (not shown) providing a light interface 5 within the cladding oxide layer 4.

Next, the method comprises the step of forming 101 a plurality of recesses extending between the support layer 1 and the silicon layer 3. Thereby, as illustrated in display 401, said recesses define a pocket 40 for the receiving of the light source device 20. Also, the recesses define a plurality of pedestals, ten in number. The pedestals 8 are provided grouped in two rows of five and are provided in parallel at opposite sides of the pocket 40. The height of the pedestals 8 is thereby defined by a selective etch. Thereby, the silicon layer material comprised in a top portion 3a of each pedestal 8 acts as etch stop. Or, in other words, silicon layer material of the silicon layer is comprised in a top portion 3a of each pedestal 8 and acts as etch stop. The rest of the pedestal, i.e., the medial portion 3b, concerns BOX layer material.

Next, the method comprises the step of providing 102 a heat-conducting metallic layer 71 and a solder layer 72, as well as depositing a seal ring 14, in this example a metal seal ring. This is illustrated in display 402. As for the heat-conducting metallic layer 71, this relates to providing, over a bottom surface of the pocket 40, a Ti/Au-alloy-based layer. This is done by means of under bump metallization, UBM. As for the solder layer 72, this related to providing, over said heat-conducting metallic layer 71, an Au/Sn-alloy-based layer as solder layer. As for the attachment of the metal seal ring 72, this may relate to any of soldering and/or UBM.

Next, the method comprises the step of providing 103 an attachment between the device 10 and a light source device 20 according to a flip-chip arrangement, including solder-based bonding, and wire bonding. This realizes an apparatus comprising the device and the light source device, with vertical alignment according to an alignment axis 6, or light beam, as illustrated in display 403.

As for the attaching according to a flip-chip arrangement, this relates to a light source device 20 being attached to the device 10. The attachment is made between an attachment-related portion of the light source device 20 and the top portions 3a of the pedestals 8 of the device 10. The attachment includes solder-based bonding, which is performed by bonding a bonding-related portion 73 of the light source device 20 and a bonding-related portion 71 of the device 10 through a solder 72. The solder is an Au/Sn-alloy-based solder. The bonding-related portion 71 of the device 10 is the TI/Au-alloy-based layer provided in the previous method step. Complementary thereto, the bonding-related portion 73 of the light source device 20 relates to another heat-conducting metallic layer 73, in this example a Ti/Pt/Au-alloy-based layer, provided over a surface of the light source device 20 in proximity of a light source 22 comprised in said light source device 20.

Still in relation to the attaching, the light source device has been prepared for optimal vertical alignment by a pre-processing step. Particularly, a passivation layer 21 has been provided over the attachment-related portion of the light source device 20. Thereby, the thickness H2 of the passivation layer 21 is chosen based on the height of the pedestals 8 for ensuring optimal vertical alignment of the light source 22 comprised in said light source device 20 and the light interface 5 comprised in the device 10. The thickness of the initial passivation layer 21', i.e., the passivation layer just after depositing, can thereby be reduced, to realize the desired passivation layer thickness. This ensures interoperability since it allows various light source devices of various sources to be useable with the device of the invention. Thereby, the light source 22 is an InP waveguide, and the light interface is a SiN waveguide.

As for the solder-based bonding, this relates to laser-assisted spot-size bonding, wherein the solder layer 72 reaches its transition temperature to ensure bonding between the heat-conducting layers 71, 73 of the device 10 and the light source device 20. The bonding may ensure attachment and at the same time realize heat conduction, allowing to dissipate heat originating from the light source device to further portions of the device 10, such as the support layer 1.

As for the wire bonding, this relates, on the one hand, to forming, within a surface portion of the device 10 situated within the seal ring 14, at least one bond pad 13. In this example, this relates to respective bond pads for connection with the pocket portion of the device 10, on the one hand, and the light source device 20, on the other hand. In this example, this furthermore involves a contact 11 provided over the bottom of the pocket 40 of the device. The actual wire bonds 12 are then provided. This relates to a pair of wire bonds 12 between the contact 11 and the bond pad 13 associated with portions of the device 10 situated in the pocket 40, on the one hand, and a pair of wire bonds 12 between the light source device 20 and the bond pad 13 associated with the light source 20, on the other hand.

Next, the method comprises the step of providing 104 a cap 18 over the pocket 40, as shown in display 404. The cap is produced from silicon and has a U-shaped cross section, as shown in display 404. The dimensions of the cap are such that the length and width match the dimensions of the metal seal ring 14, while the height is such that the cap 18 can accommodate the portion of the light source device 20 sticking out with respect to the device 10, as well as the wire bonds. Preferably, the cap provides a hermetic seal for one or more individual light source devices 20. This may relate to providing 104 multiple caps 18 at wafer scale, wherein multiple caps are provided at once. For instance, this may relate to providing a cap for all light source devices 20 of the wafer at once.

Next, the method comprises the step of slicing 105 portions of the wafer 100. This is illustrated in display 405. The method steps are advantageously carried out collectively for respective SOI wafer portions belonging to the same wafer, and the wafer is diced only at the end, obtaining respective apparatuses each comprising respective devices 10, 20. Thereby, if further devices such as modulators and/or photodiodes are present, the wafer may advantageously be sliced according to any grouping of apparatus and any of the further devices.

### (end of Example 2)

In the above, several examples are given wherein the light source device comprises a light source. However, instead of a light source device, any alignment-requiring device may be considered for integration with the SOI device, and the term "light source device" should not be construed as limiting.

## Claims

1. A silicon on insulator, SOI, device (10) for receiving a light source device (20) in a flip-chip arrangement, the device (10) comprising, from bottom to top:
- a support layer (1);
- a BOX, buried oxide, layer (2) comprising BOX material;
- a BOX-covering layer (3), preferably a silicon layer, comprising a selective etch stop material, preferably silicon layer material;
- a cladding oxide layer (4, 4c) comprising a light interface (5);
wherein the device comprises a plurality of recesses extending between the support layer (1) and the BOX-covering layer (3), said recesses defining a pocket (40) for said receiving of the light source device (20) and a plurality of pedestals (8); wherein at least one of the pedestals (8) is provided at a side of the pocket (40) that is opposite with respect to another one of the pedestals (8);
wherein the pedestals each extend between the support layer (1) and the BOX-covering layer (3), thereby comprising a top portion (3a) comprising, preferably consisting of, said selective etch stop material, said selective etch stop material preferably being silicon layer material.

2. SOI device (10) of claim 1, wherein each pedestal (8) further comprises a medial portion (2a) comprising, preferably consisting of, said BOX material; and
wherein a thickness of the medial portion (2a) is identical to a thickness of the BOX layer of the SOI wafer from which the device (10) is produced.

3. SOI device (10) of claims 1-2, wherein a thickness of the top portion (3a) is at least 10%, preferably at least 50%, more preferably at least 80%, of a thickness of the topmost layer of the SOI wafer from which the device (10) is produced, preferably of the thickness of the BOX-covering layer of the SOI wafer from which the device (10) is produced.

4. SOI device (10) of claims 1-3, wherein the number of pedestals is at least four, and wherein the plurality of pedestals (8) is provided grouped at two opposite sides of the pocket (40).

5. SOI device (10) of claim 4, wherein said being grouped relates to two rows of at least three pedestals (8) provided grouped at two opposite sides of the pocket (40).

6. SOI device (10) of claims 1-5, wherein a bottom surface of said pocket (40) extends within said support layer (1), wherein a depth (H1) of said pocket (40) with respect to the BOX layer is at least 50 nm, preferably at least 100 nm.

7. Apparatus comprising the device (10) of claims 1-6 comprising a light interface (8) and a light source device (20) comprising a light source (22);
wherein the device (10) and the light source device (20) are in a flip-chip arrangement with alignment of said light interface (8) and said light source (22); and
wherein the light source device (20) is attached to the device (10) via an attachment between an attachment-related portion of the light source device (20) and the top portions (3a) of the pedestals (8) of the device (10).

8. Apparatus of claim 7, wherein the attachment-related portion of the light source device (20) is provided with a passivation layer (21) with a thickness (H2) chosen based on a height of the pedestals (8) for ensuring vertical alignment of the light source (22) and the light interface (5), wherein preferably a thickness (H2) of the passivation layer (21) is between 50 and 500 nm, preferably is between 100 nm and 400 nm, said passivation layer (21) preferably being made of a dielectric, more preferably of an oxide or a nitride.

9. Apparatus of claims 7-8, comprising one or more further respective devices, preferably a modulator (80) and/or a photodiode (81), that comprise respective further portions of said support layer (1), said BOX layer (2) and said BOX-covering layer (3), preferably said silicon layer (3), wherein the respective further BOX-covering layer portions (3b, 3b') are selectively etched in the same etch step as the top portions (3a) of the pedestals.

10. A method of manufacturing a SOI device suitable for receiving a light source device (20) in a flip-chip arrangement, comprising the steps of:
- providing a SOI wafer portion comprising, from bottom to top:
• a support layer (1);
• a BOX, buried oxide, layer (2) comprising BOX material;
• a BOX-covering layer (3), preferably a silicon layer, comprising a selective etch stop material, said selective etch stop material preferably being silicon layer material;
- forming one or more structures in said BOX-covering layer (3), preferably said silicon layer, said structures relating to silicon structures and/or silicon nitride structures, said forming comprising each of: selectively etching said silicon layer (3), providing a cladding oxide layer (4, 4c) over said silicon layer (3), and providing a light interface (5) within said cladding oxide layer (4c);
- forming (101) a plurality of recesses extending between the support layer (1) and the BOX-covering layer (3), said recesses defining a pocket (40) for said receiving of the light source device (20) and a plurality of pedestals (8); wherein at least one of the pedestals (8) is provided at a side of the pocket (40) that is opposite with respect to another one of the pedestals (8);
wherein a height of the pedestals (8) is defined by a selective etch, whereby said selective etch stop material of the BOX-covering layer, preferably said silicon layer material of the silicon layer, is comprised in a top portion (3a) of each pedestal (8) and acts as etch stop.

11. Method of claim 10, comprising the further step of:
- providing, over a bottom surface of said pocket (40), a heat-conducting metallic layer (71), preferably a Ti/Au-alloy-based layer, preferably by means of under bump metallization, UBM;
- providing, over said heat-conducting metallic layer (71), a solder layer (72), preferably a Au/Sn-alloy-based layer.

12. Method of claims 10-11, comprising the further step of:
- attaching, according to a flip-chip arrangement, a light source device (20) to the device (10), said attaching relating to an attachment between an attachment-related portion of the light source device (20) and the top portions (3a) of the pedestals (8) of the device (10);
wherein **preferably** said attaching comprises bonding, through soldering, of a bonding-related portion (73) of said light source device (20) and a bonding-related portion (71) of said device (10) through a solder (72), preferably an Au/Sn-alloy-based solder;
wherein **preferably** said bonding-related portion (71) of said device (10) relates to a heat-conducting metallic layer (71), preferably a TI/Au-alloy-based layer, provided over a bottom surface of said pocket (40); **and/or**
**preferably** said bonding-related portion (73) of said light source device (20) relates to a heat-conducting metallic layer (73), preferably a Ti/Pt/Au-alloy-based layer, provided over a surface of said light source device (20) in proximity of a light source (22) comprised in said light source device (20).

13. Method of claim 12, further comprising the step, prior to said attaching, of:
- providing, over an attachment-related portion of the light source device (20), a passivation layer (21);
wherein a thickness (H2) of said passivation layer (21) is chosen based on a height of the pedestals (8) for ensuring vertical alignment of a light source (22) comprised in said light source device (20) and said light interface (5).

14. Method of claims 10-13, wherein said light source (22) relates to an InP waveguide, and wherein said light interface relates to a SiN waveguide.

15. Method of claims 10-14, wherein the method steps are carried out collectively for respective SOI wafer portions belonging to the same wafer, wherein the method comprises the further step of dicing the wafer for obtaining respective devices (10, 20).
